# EUROPÄISCHE PATENTSCHRIFT

(11) **EP 0 284 889 B1**
(45) Veröffentlichungstag und Bekanntmachung des Hinweises auf die Patenterteilung: **07.01.1993**
(21) Anmeldenummer: 88104139.6
(22) Anmeldetag: 16.03.1988
(51) Int. Cl.: H02B 1/18, H05K 7/20

(54) **Schaltschrank mit Klimagerät**
Switchboard cabinet with an air conditioner
Armoire de commutation avec conditionneur d'air

(30) Priorität: 30.03.1987 DE 3710566
(43) Veröffentlichungstag der Anmeldung: 05.10.1988
(73) Patentinhaber: Rittal-Werk Rudolf Loh GmbH & Co. KG, 35745 Herborn (DE)
(72) Erfinder: Immel, Manfred, D-6349 Mittenaar (DE)
(74) Vertreter: Vogel, Georg

(56) Entgegenhaltungen:
- EP-A- 0 057 411
- DE-A- 3 504 207

## Beschreibung

Die Erfindung betrifft einen Schaltschrank mit Klimagerät, bei dem die Deckwand des Schrankkorpus und die Unterseite des Klimagerätes mit aufeinander abgestimmten und ausgerichteten Durchbrüchen versehen und miteinander verbunden sind. Ein Schaltschrank dieser Art ist aus EP-A-0 057 411 bekannt. Dabei ist die Befestigungsart zwischen Schaltschrank und Klimagerät nicht in Detail beschrieben.

Bei anderen bekannten Schaltschränken mit Klimagerät werden Schraubverbindungen verwendet, die das Klimagerät mit der Deckseite des Schrankkorpus verbinden, wobei die fluchtenden Durchbrüche nicht nur Kanäle zum Führen von Anschlußkabeln bilden, sondern auch als Zuluft- und Abluftkanäle dienen. Die Schraubverbindungen zwischen dem Klimagerät und dem Schrankkorpus erschweren nicht nur die Anbringung des Klimagerätes auf dem Schaltschrank, sie erlauben auch kein schnelles und leichtes Lösen des Klimagerätes beim Austausch oder bei Reparatur- oder Wartungsarbeiten.

Es ist Aufgabe der Erfindung, einen Schaltschrank mit Klimagerät der eingangs erwähnten Art zu schaffen, bei dem das Klimagerät schnell und leicht auf dem Schaltschrank befestigt und ebenso schnell und leicht wieder vom Schaltschrank gelöst werden kann, ohne die Kabelführung und die Bildung der erforderlichen Luftkanäle zu beeinträchtigen.

Diese Aufgabe wird nach der Erfindung dadurch gelöst, daß mit der Deckwand des Schrankkorpus eine Zwischenplatte mit Durchbrüchen fest verbunden ist, daß die Durchbrüche der Zwischenplatte auf die Durchbrüche in der Deckwand des Schrankkorpus abgestimmt und ausgerichtet sind, daß die Zwischenplatte an drei Seiten mit einem hochgebogenen Rand versehen ist, und daß zum lösbaren Verbinden von Klimagerät und Zwischenplatte auf den Außenseiten der einander gegenüberliegenden Ränder der Zwischenplatte und den zugekehrten Außenseiten des in die Zwischenplatte eingeschobenen Klimagerätes aufeinander abgestimmte Verschlußteile von jeweils mindestens einem Schnellverschluß angebracht sind.

Die Zwischenplatte wird einmal fest mit der Deckwand des Schrankkorpus verbunden und verbleibt in dieser Verbindungsstellung. Das Klimagerät wird auf die Zwischenplatte gestellt, wobei die Ränder derselben eine definierte Verbindungsstellung zwischen dem Klimagerät und der Zwischenplatte sicherstellen. Die Verschlußteile der Schnellverschlüsse stehen in der richtigen Zuordnung zueinander und brauchen nur noch betätigt zu werden, um die Verbindung zwischen dem Klimagerät und der fest mit dem Schrankkorpus verbundenen Zwischenplatte herzustellen. Soll das Klimagerät von dem Schaltschrank gelöst werden, dann brauchen nur die Schnellverschlüsse ausgelöst zu werden, um das Klimagerät aus der Teilaufnahme der Zwischenplatte entnehmen zu können. Die Führung der Anschlußkabel vom Klimagerät in den Schaltschrank und die Bildung der Luftkanäle zwischen dem Klimagerät und dem Schaltschrank werden durch die Zwischenplatte keinesfalls beeinträchtigt, da ihre Durchbrüche mit den Durchbrüchen in der Deckwand des Schaltschrankes und der Unterseite des Klimagerätes abgestimmt und auf diese ausgerichtet sind. Dabei wird vorzugsweise dieselbe Größe und Form für die einander zugeordneten Durchbrüche gewählt, die dann in der Montagestellung miteinander fluchten.

Das Einschieben des Klimagerätes in die Aufnahme der Zwischenplatte wird dadurch erleichtert, daß die Schnellverschlüsse an den Schmalseiten der rechteckförmig ausgebildeten Zwischenplatte und des quaderförmigen Klimagerätes angebracht sind, da dabei das quaderförmige Klimagerät besser zu halten ist.

Um eine abgedichtete Verbindung zwischen dem Schrankkorpus und der Zwischenplatte zu schaffen, sieht eine weitere Ausgestaltung vor, daß die Zwischenplatte unter Zwischenlage einer ersten Isolier- und Abdichtungsplatte mit der Deckwand des Schrankkorpus verbunden ist, wobei die Isolier- und Abdichtungsplatte mit Durchbrüchen versehen ist, die auf die Durchbrüche in der Deckwand des Schrankkorpus und die Durchbrüche der Zwischenplatte abgestimmt und ausgerichtet sind.

Die feste Verbindung zwischen der Zwischenplatte und dem Schaltschrank ist nach einer Ausgestaltung so ausgeführt, daß an der Unterseite der Zwischenplatte Gewindebolzen fest angebracht sind, die durch Bohrungen der ersten Isolier-und Abdichtungsplatte und Bohrungen in der Deckwand des Schrankkorpus geführt sind, und daß auf die an der Innenseite der Deckwand des Schrankkorpus vorstehenden Teile der Gewindebolzen Unterlagscheiben aufgebracht und Muttern aufgeschraubt sind.

Bei einem mittels Schranktür verschließbaren Schrankkorpus ist nach einer Ausgestaltung die randlose Seite der Zwischenplatte der Schranktür zugekehrt, so daß das Klimagerät auch bei einer Aufstellung des Schaltschrankes an einer Wand von der Vorderseite des Schaltschrankes aus in die Teilaufnahme der Zwischenplatte eingebracht und aus dieser wieder entnommen werden kann.

Um den Übergang von dem Klimagerät zu der Zwischenplatte dicht zu bekommen, sieht eine weitere Ausgestaltung vor, daß zwischen der Zwischenplatte und der Unterseite des Klimagerätes eine zweite Isolier- und Abdichtungsplatte angeordnet ist, die in die von den Rändern gebildete Aufnahme der Zwischenplatte eingelegt ist, und daß die zweite Isolier-und Abdichtungsplatte mit Durchbrüchen versehen ist, die auf die Durchbrüche der Zwischenplatte und Durchbrüche in der Unterseite des Klimagerätes abgestimmt und ausgerichtet sind.

Als Schnellverschlüsse werden bevorzugt manuell betätigbare Hebelverschlüsse eingesetzt.

Damit das Klimagerät beim Einschieben in die Teilaufnahme der Zwischenplatte stets eine definierte Montage- oder Verbindungsstellung einnimmt, sieht eine Ausgestaltung vor, daß die von den Rändern der Zwischenplatte umschlossene Teilaufnahme an den Außenquerschnitt des Klimagerätes im Bereich der Unterseite angepaßt ist. Das Klimagerät wird von der randlosen Seite der Zwischenplatte aus bis zum Anschlag an dem gegenüberliegenden Rand in die Teilaufnahme der Zwischenplatte eingeschoben.

Um die Kabelführung vom Klimagerät bis zum Schaltschrank ebensowenig zu beeinträchtigen wie die Bildung der Luftkanäle, sieht eine Ausgestaltung vor, daß die einander zugeordneten Durchbrüche in der Deckwand des Schrankkorpus, der ersten und zweiten Isolier- und Abdichtungsplatte, der Zwischenplatte und der Unterseite des Klimagerätes gleiche Größe und Form aufweisen und miteinander fluchtend ausgerichtet sind.

Die Erfindung wird anhand eines in den Zeichnungen dargestellten Ausführungsbeispiels näher erläutert. Es zeigt:
Fig. 1 in Explosionsdarstellung die Teile zum lösbaren Befestigen eines Klimagerätes auf einem Schaltschrank und

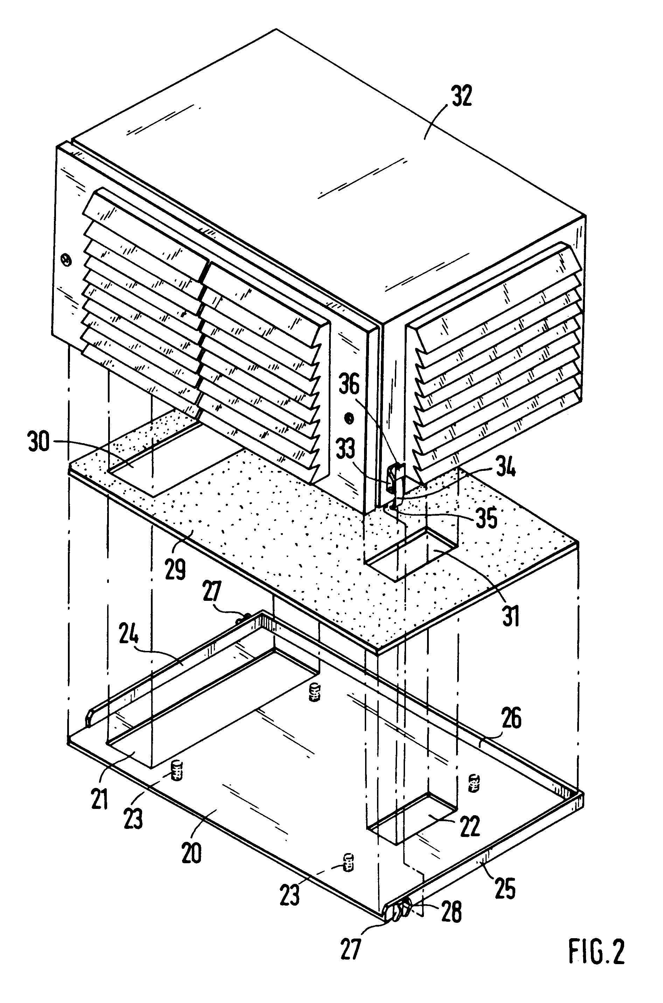

Fig. 2 in vergrößerter Darstellung den Teilbereich zwischen der Zwischenplatte und dem Klimagerät.

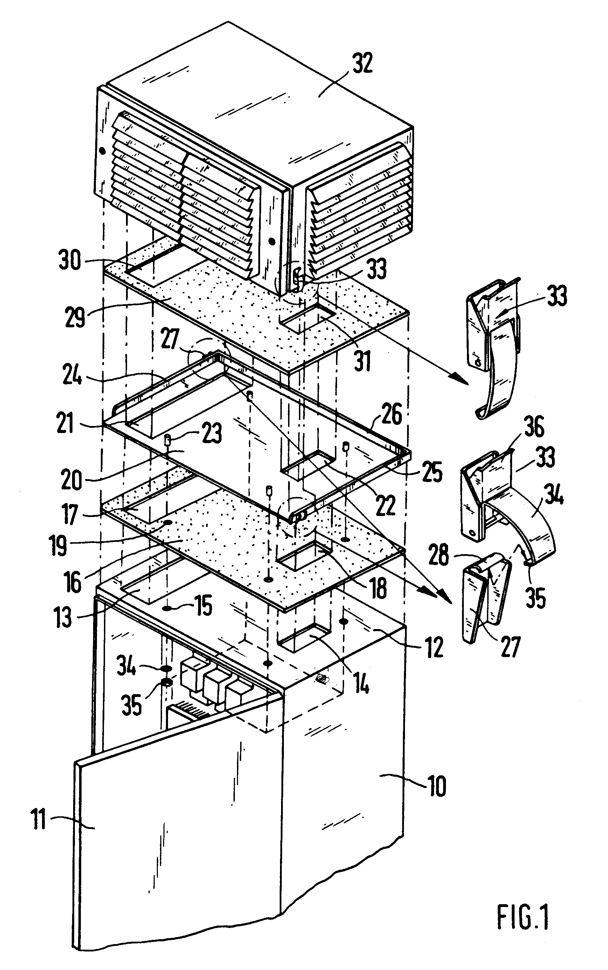

Von dem Schaltschrank ist in der Fig. 1 nur der obere Teil angedeutet. Der Schrankkorpus 10 wird an der offenen Vorderseite mittels der Schranktür 11 verschlossen. Die Deckwand 12 des Schrankkorpus 10 weist die beiden rechteckförmigen Durchbrüche 13 und 14 auf, die in der Form und Größe gleichen Durchbrüchen in der Unterseite des Klimagerätes 32 entsprechen und auf diese ausgerichtet sind. Außerdem sind in die Deckseite 12 des Schrankkorpus 10 vier Bohrungen 15 eingebracht.

Auf der Deckwand 12 des Schrankkorpus 10 wird unter Zwischenlage der ersten Isolier- und Abdichtungsplatte 16 die Zwischenplatte 20 befestigt. Dabei weist die erste Isolier- und Abdichtungsplatte 16 die Durchbrüche 17 und 18 und die Bohrungen 19 auf, die mit den Durchbrüchen 13 und 14 und den Bohrungen 15 in der Deckwand 12 des Schrankkorpus 10 abgestimmt und ausgerichtet sind, d.h. mit diesen fluchten. Auch die Zwischenplatte 20 weist Durchbrüche 21 und 22 auf, die mit den Durchbrüchen 17 und 18 der ersten Isolier- und Abdichtungsplatte 16 und den Durchbrüchen 13 und 14 in der Deckwand 12 des Schrankkorpus 10 fluchten. An der Unterseite der Zwischenplatte 20 sind vier Gewindebolzen 23 angebracht, die auf die Bohrungen 19 der ersten Isolier- und Abdichtungsplatte 16 und die Bohrungen 15 in der Deckseite 12 des Schrankkorpus 10 ausgerichtet sind. Diese Gewindebolzen 23 werden durch die Bohrungen 19 und 15 geführt und ragen auf der Innenseite der Deckwand 12 des Schrankkorpus 10 teilweise heraus. Auf diese Teile der Gewindebolzen 23 werden Unterlagscheiben 34 aufgeschoben und Muttern 35 aufgeschraubt, so daß die Zwischenplatte 20, z.B. aus Metall, unter Zwischenlage der ersten Isolier-und Abdichtungsplatte 16, z.B. aus Gummi oder elastischem Kunststoff, fest mit dem Schaltschrank verbunden, d.h. verschraubt ist. Dabei dichtet die erste Isolier- und Abdichtungsplatte 16 den Übergang von der Zwischenplatte 20 zu der Deckwand 12 des Schrankkorpus 10, insbesondere im Bereich der Durchbrüche 13 und 17, sowie 14 und 18, eindeutig ab.

Die Zwischenplatte 20 ist an drei Seiten mit einem hochgebogenen Rand 24, 25 bzw. 26 versehen. Diese Ränder 24, 25 und 26 bilden eine Teilaufnahme, die im Querschnitt an den Außenquerschnitt im Bereich der Unterseite des Klimagerätes 32 angepaßt ist. Das Klimagerät 32 kann daher von der offenen Vorderseite der Zwischenplatte 20 aus in die Teilaufnahme eingeschoben werden, bis es an dem Rand 26 anstößt. Die offene Vorderseite der Teilaufnahme der Zwischenplatte 20 ist der Schranktür 11 zugekehrt, so daß das Klimagerät 32 auch bei einem an einer Wand abgestellten Schaltschrank von der Vorderseite aus in die Teilaufnahme der Zwischenplatte 20 eingebracht und aus dieser wieder entnommen werden kann.

Auf den Außenseiten der Ränder 24 und 25 der Schmalseiten der rechteckförmigen Zwischenplatte 20 sind die Verschlußteile 27 mit dem Verschlußhaken 28 angebracht. Dabei genügt es, wenn auf jeder Seite mindestens ein Schnellverschluß vorgesehen ist. Im Ausführungsbeispiel sind die beiden Schnellverschlüsse an den diagonal zueinander liegenden Endbereichen der Ränder 24 und 25 angebracht. Die ergänzenden Verschlußteile 33 der Schnellverschlüsse sind auf den Außenseiten der Schmalseiten des Klimagerätes 32 entsprechend verteilt angebracht und mit den Verschlußhebeln 34 versehen, die mit den abgewinkelten Enden 35 die Verschlußhaken 28 der Verschlußteile 27 hintergreifen. Mit dem Betätigungsglied 36 können die Schnellverschlüsse aus je einem Verschlußteil 27 und einem Verschlußteil 33 gespannt und wieder gelöst werden.

Bevor das Klimagerät 32 in die Teilaufnahme der Zwischenplatte 20 eingebracht wird, wird die zweite Isolier-und Abdichtungsplatte 29 in die Teilaufnahme eingebracht. Diese zweite Isolier- und Abdichtungsplatte 29 kann aus Gummi oder elastischem Kunststoff bestehen und dichtet den Übergang von der Unterseite des Klimagerätes 32 zu der Zwischenplatte 20, insbesondere im Bereich der Durchbrüche 21 und 22, ab. Daher weist die zweite Isolier-und Abdichtungsplatte 29 auch die Durchbrüche 30 und 31 auf, die mit den Durchbrüchen 21 und 22 der Zwischenplatte 20 fluchten.

Die Zwischenplatte 20 und die erste Isolier- und Abdichtungsplatte 16 bleiben stets mit der Deckwand 12 des Schrankkorpus 10 verbunden. Das Klimagerät 32 kann aber mittels der Schnellverschlüsse sehr schnell und leicht mit der Zwischenplatte 20 verbunden und ebenso schnell und leicht wieder von dieser gelöst werden. Dabei erleichtert die aus den Rändern 24, 25 und 26 der Zwischenplatte 20 gebildete Teilaufnahme das Einsetzen des Klimagerätes 32.

Da diese Teilaufnahme auch gleich die richtige Zuordnung der Verschlußteile 27 und 33 vornimmt, können die Schnellverschlüsse sofort geschlossen werden. Zum Abnehmen des Klimagerätes 32 vom Schaltschrank brauchen die Schnellverschlüsse nur gelöst zu werden. Das Anschlußkabel für das Klimagerät 32 kann durch einen der Durchbrüche in den Schaltschrank geführt werden. Die elektrische Verbindung zwischen dem Schaltschrank und dem Klimagerät 32 kann auch über Steckverbinder erfolgen, wobei der eine außerhalb der Zwischenplatte 20 auf der Deckwand 12 des Schrankkorpus 10 angebracht sein kann, während der dazugehörige komplementäre Steckverbinder am Ende eines aus dem Klimagerät 32 herausgeführten Anschlußkabels angebracht sein kann.

## Patentansprüche

1. Schaltschrank mit Klimagerät (32), bei dem die Deckwand (12) des Schrankkorpus (10) und die Unterseite des Klimagerätes mit aufeinander abgestimmten und ausgerichteten Durchbrüchen (13,14), die als Zuluft- und Abluftkanäle dienen, versehen und miteinander verbunden sind,
dadurch gekennzeichnet,
daß mit der Deckwand (12) des Schrankkorpus (10) eine Zwischenplatte (20) mit Durchbrüchen (21,22) fest verbunden ist,
daß die Durchbrüche (21,22) der Zwischenplatte (20) auf die Durchbrüche (13,14) in der Deckwand (12) des Schrankkorpus (10) abgestimmt und ausgerichtet sind,
daß die Zwischenplatte (20) an drei Seiten mit einem hochgebogenen Rand (24,25,26) versehen ist, und
daß zum lösbaren Verbinden von Klimagerät (32) und Zwischenplatte (20) auf den Außenseiten der einander gegenüberliegenden Ränder (24,25) der Zwischenplatte (20) und den zugekehrten Außenseiten des in die Zwischenplatte (20) eingeschobnen Klimagerätes (32) aufeinander abgestimmte Verschlußteile (27,33) von jeweils mindestens einem Schnellverschluß angebracht sind.

2. Schaltschrank nach Anspruch 1,
dadurch gekennzeichnet,
daß die Schnellverschlüsse an den Schmalseiten der rechteckförmig ausgebildeten Zwischenplatte (20) und des quaderförmigen Klimagerätes (32) angebracht sind.

3. Schaltschrank nach Anspruch 1 oder 2,
dadurch gekennzeichnet,
daß die Zwischenplatte (20) unter Zwischenlage einer ersten Isolier- und Abdichtungsplatte (16) mit der Deckwand (12) des Schrankkorpus (10) verbunden ist, wobei die Isolier- und Abdichtungsplatte (16) mit Durchbrüchen (17,18) versehen ist, die auf die Durchbrüche (13,14) in der Deckwand (12) des Schrankkorpus (10) und die Durchbrüche (21,22) der Zwischenplatte (20) abgestimmt und ausgerichtet sind.

4. Schaltschrank nach einem Ansprüche 1 bis 3,
dadurch gekennzeichnet,
daß an der Unterseite der Zwischenplatte (20) Gewindebolzen (23) fest angebracht sind, die durch Bohrungen (19) der ersten Isolier- und Abdichtungsplatte (16) und Bohrungen (15) in der Deckwand (12) des Schrankkorpus (10) geführt sind, und
daß auf die an der Innenseite der Deckwand (12) des Schrankkorpus (10) vorstehenden Teile der Gewindebolzen (23) Unterlagscheiben (34) aufgebracht und Muttern (35) aufgeschraubt sind.

5. Schaltschrank nach einem der Ansprüche 1 bis 4,
dadurch gekennzeichnet,
daß bei einem mittels Schranktür (11) verschließbaren Schrankkorpus (10) die randlose Seite der Zwischenplatte (20) der Schranktür (11) zugekehrt ist.

6. Schaltschrank nach einem der Ansprüche 1 bis 5,
dadurch gekennzeichnet,
daß zwischen der Zwischenplatte (20) und der Unterseite des Klimagerätes (32) eine zweite Isolier- und Abdichtungsplatte (29) angeordnet ist, die in die von den Rändern (24,25,26) gebildete Aufnahme der Zwischenplatte (20) eingelegt ist, und
daß die zweite Isolier- und Abdichtungsplatte (29) mit Durchbrüchen (30,31) versehen ist, die auf die Durchbrüche (21,22) der Zwischenplatte (20) und Durchbrüche in der Unterseite des Klimagerätes (32) abgestimmt und ausgerichtet sind.

7. Schaltschrank nach einem der Ansprüche 1 bis 6,
dadurch gekennzeichnet,
daß die Schnellverschlüsse manuell betätigbar und vorzugsweise als Hebelverschlüsse ausgebildet sind.

8. Schaltschrank nach einem der Ansprüche 1 bis 7,
dadurch gekennzeichnet,
daß die von den Rändern (24,25,26) der Zwischenplatte (20) umschlossene Teilaufnahme an den Außenquerschnitt des Klimagerätes (32) im Bereich der Unterseite angepaßt ist.

9. Schaltschrank nach einem der Ansprüche 1 bis 8,
dadurch gekennzeichnet,
daß die einander zugeordneten Durchbrüche (13,17,21,30 bzw. 14,18,22,31) in der Deckwand (12) des Schrankkorpus (10), der ersten und zweiten Isolier- und Abdichtungsplatte (16,29), der Zwischenplatte (20) und der Unterseite des Klimagerätes (32) gleiche Größe und Form aufweisen und miteinander fluchtend ausgerichtet sind.

## Claims

1. Switchgear cabinet provided with an air conditioner (32), wherein the top wall (12) of the cabinet body (10) and the underside of the air conditioner are interconnected and are provided with openings (13, 14), which are adapted to one another and aligned with one another and serve as air-supply and air-discharge ducts, characterised in that an intermediate plate (20) is provided with openings (21, 22) and is securedly connected to the top wall (12) of the cabinet body (10), in that the openings (21, 22) in the intermediate plate (20) are adapted to, and aligned with, the openings (13, 14) in the top wall (12) of the cabinet body (10), in that the intermediate plate (20) is provided on three sides with an upturned rim (24, 25, 26), and in that closure members (27, 33) of at least one snap closure are adapted to one another and are mounted on the external surfaces of the oppositely situated rims (24, 25) of the intermediate plate (20) and on the facing external surfaces of the air conditioner (32), which is inserted into the intermediate plate, for the detachable connection of the air conditioner (32) to the intermediate plate (20).

2. Switchgear cabinet according to claim 1, characterised in that the snap closures are mounted on the narrow sides of the rectangularly-shaped intermediate plate (20) and of the parallelepiped-shaped air conditioner (32).

3. Switchgear cabinet according to claim 1 or 2, characterised in that the intermediate plate (20) is connected to the top wall (12) of the cabinet body (10) by the interposition of a first insulating and sealing plate (16), the insulating and sealing plate (16) being provided with openings (17, 18), which are adapted to, and aligned with, the openings (13, 14) in the top wall (12) of the cabinet body (10) and the openings (21, 22) in the intermediate plate (20).

4. Switchgear cabinet according to one of claims 1 to 3, characterised in that threaded bolts (23) are securedly mounted on the underside of the intermediate plate (20) and extend through bores (19) in the first insulating and sealing plate (16) and through bores (15) in the top wall (12) of the cabinet body (10), and in that supporting members (34) are mounted on the portions of the threaded bolts (23) protruding beyond the internal surface of the top wall (12) of the cabinet body (10), and nuts (35) are screwed thereon.

5. Switchgear cabinet according to one of claims 1 to 4, characterised in that, when the cabinet body (10) is one which is closable by means of cabinet door (11), the rimless side of the intermediate plate (20) faces the cabinet door (11).

6. Switchgear cabinet according to one of claims 1 to 5, characterised in that a second insulating and sealing plate (29) is disposed between the intermediate plate (20) and the underside of the air conditioner (32) and is inserted into the receiver of the intermediate plate (20) formed by the rims (24, 25, 26), and in that the second insulating and sealing plate (29) is provided with openings (30, 31), which are adapted to, and aligned with, the openings (21, 22) in the intermediate plate (20) and the openings in the underside of the air conditioner (32).

7. Switchgear cabinet according to one of claims 1 to 6, characterised in that the snap closures are manually operable and are preferably in the form of lever fasteners.

8. Switchgear cabinet according to one of claims 1 to 7, characterised in that the partial receiver, which is surrounded by the rims (24, 25, 26) of the intermediate plate (20), is adapted to the external cross-section of the air conditioner (32) in the region of the underside.

9. Switchgear cabinet according to one of claims 1 to 8, characterised in that the openings (13, 17, 21, 30 and 14, 18, 22, 31 respectively) in the top wall (12) of the cabinet body (10), which are associated with one another, have a magnitude and configuration identical to the first and second insulating and sealing plates (16, 29), the intermediate plate (20) and the underside of the air conditioner (32), and they are in alignment with one another.

## Revendications

1. Armoire de commutation avec conditionneur d'air (32), dans laquelle la paroi de recouvrement (12) du corps (10) de l'armoire et la face inférieure du conditionneur présentent des passages (13, 14) servant de conduits d'admission et d'évacuation d'air en correspondance les uns avec les autres et en alignement, la paroi de recouvrement du corps (10) et le conditionneur (32) étant reliés l'un à l'autre,
caractérisée
par le fait qu'à la paroi de recouvrement (12) du corps (10) de l'armoire est fixée à demeure une plaque intermédiaire (20) présentant des passages (21, 22),
par le fait que les passages (21, 22) de la plaque intermédiaire (20) sont en concordance et en alignement avec les passages (13, 14) dans la paroi de recouvrement (12) du corps (10) de l'armoire,
par le fait que sur trois côtés, la plaque intermédiaire (20) est dotée d'un bord incurvé vers le haut (24, 25, 26), et par le fait qu'aux fins de la liaison amovible du conditionneur (32) et de la plaque intermédiaire (20) il est disposé sur les faces extérieures des bords (24, 25) diamétralement opposés de la plaque intermédiaire (20) et sur les faces extérieures du conditionneur (32) introduit par glissement dans la plaque intermédiaire (20), des éléments de fermeture (27, 33) harmonisés mutuellement d'au moins un dispositif de fermeture rapide.

2. Armoire de commutation suivant la revendication 1,
caractérisé en ce que
les dispositifs de fermeture rapide sont montés sur les petits côtés de la plaque intermédiaire (20) de forme rectangulaire et du conditionneur (32) de forme parallélépipédique.

3. Armoire de commutation suivant la revendication 1 ou la revendication 2,
caractérisée en ce que
la plaque intermédiaire est reliée à la paroi de recouvrement (12) du corps (10) de l'armoire, avec interposition d'une première plaque d'isolation et d'étanchéité (16), la plaque d'isolation et d'étanchéité (16) présentant des passages (17, 18), qui sont en concordance et en alignement avec les passages (13, 14) dans la paroi de recouvrement (12) du corps (10) de l'armoire et avec les passages (21, 22) de la plaque intermédiaire.

4. Armoire de commutation suivant l'une quelconque des revendications de 1 à 3,
caractérisée
en ce qu'à la face inférieure de la plaque intermédiaire (20) sont disposés rigidement des boulons filetés (23), qui sont guidés au travers de forures (19) de la première plaque d'isolation et d'étanchéité (16) et au travers de forures (15) dans la paroi de recouvrement (12), et
en ce que sur les tronçons des boulons filetés (23) en protubérance à la face intérieure de la paroi de recouvrement (12) du corps (10) de l'armoire sont montées des rondelles (34) et sont vissés des écrous (35).

5. Armoire de commutation suivant l'une quelconque des revendications de 1 à 4,
caractérisée
en ce qu'avec un corps (10) d'armoire susceptible d'être fermé au moyen d'une porte d'armoire (11), le côté sans bord de la plaque intermédiaire (20) est orienté vers la porte (11) de l'armoire.

6. Armoire de commutation suivant l'une quelconque des revendications de 1 à 5,
caractérisée
en ce qu'entre la plaque intermédiaire (20) et la face inférieure du conditionneur (32) il est disposé une deuxième plaque d'isolation et d'étanchéité (29), qui est placée dans le logement de la plaque intermédiaire (20) qui est formé par les bords (24, 25, 26), et
en ce que la deuxième plaque d'isolation et d'étanchéité (29) présente des passages (30, 31), qui sont disposés en correspondance et en alignement avec les passages (21, 22) de la plaque intermédiaire (20) et avec les passages dans la face inférieure du conditionneur (32).

7. Armoire de commutation suivant l'une quelconque des revendications de 1 à 6,
caractérisée
en ce que les dispositifs de fermeture rapide peuvent être manoeuvrés manuellement et ont de préférence la forme de fermetures à levier.

8. Armoire de commutation suivant l'une quelconque des revendications de 1 à 7,
caractérisée
en ce que le logement partiel circonscrit par les bords (24, 25, 26) de la plaque intermédiaire (20) est adapté à la section transversale extérieure du conditionneur (32) dans la région de la face inférieure.

9. Armoire de commutation suivant l'une quelconque des revendications de 1 à 7,
caractérisée
en ce que les passages (13, 17, 21, 30, ou 14, 18, 22, 31) mutuellement correspondants dans la paroi de recouvrement (12) du corps (10) de l'armoire, dans la première et dans la deuxième plaque d'isolation et d'étanchéité (16, 29), dans la plaque intermédiaire (20) et dans la face inférieure du conditionneur (32) ont la même grandeur et la même forme et sont disposés en alignement.
